# EUROPEAN PATENT SPECIFICATION

(11) **EP 2 434 367 B1**
(45) Date of publication and mention of the grant of the patent: **06.05.2015**
(21) Application number: 10179225.7
(22) Date of filing: 24.09.2010
(51) Int. Cl.: H04M 1/02, G06F 1/16, H04M 1/18

(54) **Gasket and display assembly for an electronic mobile device**
Dichtungs- und Anzeigeanordnung für eine elektronische mobile Vorrichtung
Joint et ensemble d'affichage pour dispositif mobile électronique

(43) Date of publication of application: 28.03.2012
(73) Proprietor: BlackBerry Limited, Waterloo, ON N2K 0A7 (CA)
(72) Inventor: Chen, Chao, Waterloo Ontario N2L 3W8 (CA)
(74) Representative: Roberts, Gwilym Vaughan

(56) References cited:
- WO-A2-2009/126480
- US-A1- 2003 048 597
- US-A1- 2010 061 055

## Description

### BACKGROUND OF THE DISCLOSURE

The present disclosure generally relates to an electronic mobile device having a gasket for inhibiting debris ingress to a device housing.

Electronic mobile devices (*e.g.,* cellular phones, pagers, global positioning system (GPS) navigation devices and other satellite navigation devices, smart phones, wireless organizers, wireless personal digital assistants (PDAs), and the like) typically comprise delicate components *(e.g.,* displays, electronic circuits, and the like) that can easily be damaged during everyday use. For example, an electronic mobile device display can be damaged by impact forces transferred through the outer device housing when dropped. As another example, electronic circuits within the device can be rendered inoperable if debris *(e.g.,* dust particles) enters the device through gaps between adjacent components.

For the above reasons, electronic mobile devices typically include one or more gaskets or seals between some adjacent components, such as the device housing and the display assembly. That is, these gaskets transfer impact forces to more rugged components *(e.g.,* support frames within the device) and away from delicate components (*e.g.,* display panels). In addition, the same or additional gaskets inhibit debris ingress that could damage electronic circuits.

Unfortunately, these gaskets, due to their tight positioning between adjacent components, typically make device assembly relatively difficult. For example, it can be difficult to press a display panel into a gasket that extends around the perimeter of the display panel because of the small clearances between the two components. If care is not taken during this step, the display panel could flatten part of the gasket instead of properly connecting to it, thereby partially rendering the gasket ineffective for inhibiting debris ingress. As another example, other methods for connecting a gasket to a display panel, such as co-molding, typically fail because of different material properties of the two components. In particular, display panels typically cannot tolerate the high temperatures used in co-molding operations. For these reasons, electronic mobile devices typically do not include a gasket that contacts a display panel, and debris may thereby enter and accumulate beneath the display panel.

WO 2009/126480 discloses a portable electronic device with two-piece housing. Each device may be formed from two parts. A first part may be provided with components such as a display, a touch screen, a cover glass, and a frame. A second part may be provided with a plastic housing, circuit boards containing electrical components, and a bezel. Engagement members may be connected to the first and second parts. The engagement members may be formed from metal clips with holes and springs with flexible spring prongs that mate with the holes in the clips. The metal clips may be welded to frame struts on the frame and the springs may be welded to the bezel. During assembly, the first part may be rotated into place within the second part. Retention clips attached to the frame may be used to secure the two parts together. Assembly instructions and associated connector numbers may be provided within the devices.

US2010/00061055 discloses a handheld computing device. A minimum Z height handheld electronic device and methods of assembly are disclosed. The electronic device includes a single seamless housing having a front opening and a cover disposed within the front opening and attached to the seamless housing with a bezel.

US2003/0048597 Discloses a personal digital assistant with waterproof and dustproof functions. A personal digital assistant with waterproof and dustproof functions including a carriage, an LCD module, a holding frame, a touch-control panel module, an elastic object and an upper cover is provided. The carriage is installed inside the PDA; the LCD module is mounted on the carriage while the holding frame is mounted on the LCD module; the touch-control panel module is mounted on the holding frame and is assembled to the LCD module. The elastic object is pasted in dots to the holding frame along the four edges of the touch-control panel; whereas the upper cover, which covers on top of the touch-control panel module, presses the elastic objects such that the touch-control panel module and the LCD module are tightly assembled together. The design of the personal digital assistant has the characteristics of easy assembly and disassembly as well as waterproof and dustproof functions.

Aspects of the claimed device are defined in the accompanying independent claims.

### BRIEF DESCRIPTION OF THE DRAWINGS

Fig. 1 is a perspective view of an electronic mobile device according to the present disclosure;
Fig. 2 is a perspective section view of a display assembly and a gasket of the electronic mobile device along line 2-2 of Fig. 1;
Fig. 3 is a front section view of the display assembly and the gasket along line 2-2 of Fig. 1;
Fig. 4 is a flow chart illustrating a manufacturing process for the electronic mobile device of Fig. 1;
Fig. 5 is a perspective view of a manufacturing subassembly including a spacer of the display assembly connected to a display base;
Fig. 6 is a perspective section view of a manufacturing subassembly including the gasket connected to the spacer of Fig. 5;
Fig. 7 is a detail perspective view of the subassembly of Fig. 6 enclosed by line 7-7;
Fig. 8 is an exploded perspective view of a manufacturing subassembly including the subassembly of Fig. 6, adhesives, a display, and an outer panel;
Fig. 9 is a detail section view of the subassembly of Fig. 8;
Fig. 10 is an exploded section view of a manufacturing subassembly including the subassembly of Fig. 8 and a device housing; and
Fig. 11 is a section view illustrating deformation of the gasket due to engagement with the device housing.

### DETAILED DESCRIPTION

According to some embodiments, an electronic mobile device comprises a device housing and a spacer supported within the device housing. An outer panel is supported by the spacer, and the outer panel and the spacer together define an internal recess. A display configured to display information is supported by the device housing within the internal recess. A gasket is compressed between the device housing, the spacer, and the outer panel to inhibit debris ingress to the device claims.

### BRIEF DESCRIPTION OF THE DRAWINGS

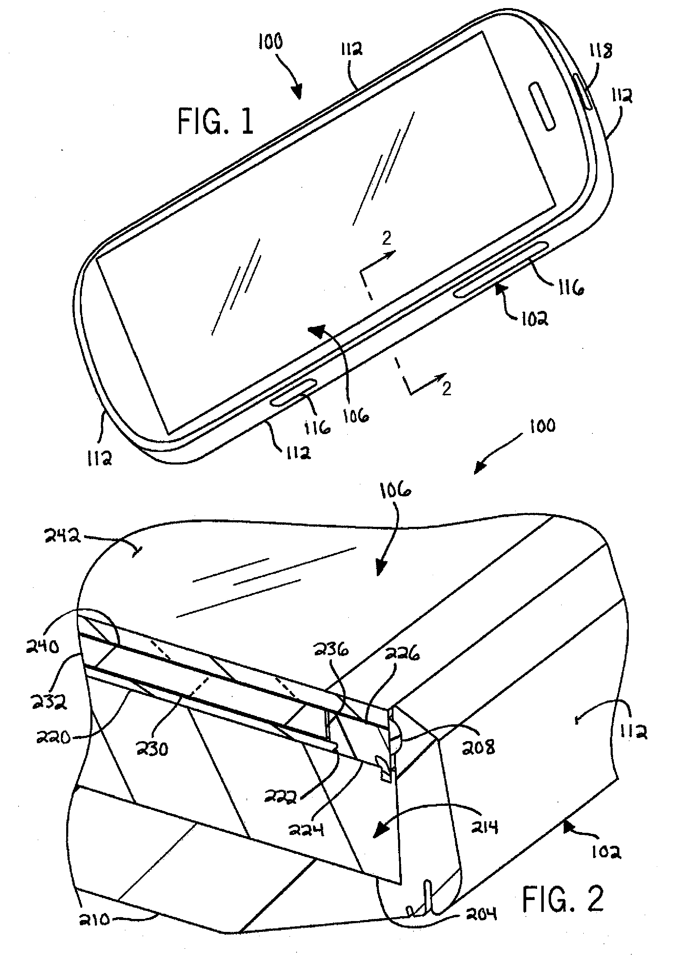

Fig. 1 is a perspective view of an electronic mobile device according to the present disclosure;
Fig. 2 is a perspective section view of a display assembly and a gasket of the electronic mobile device along line 2-2 of Fig. 1;

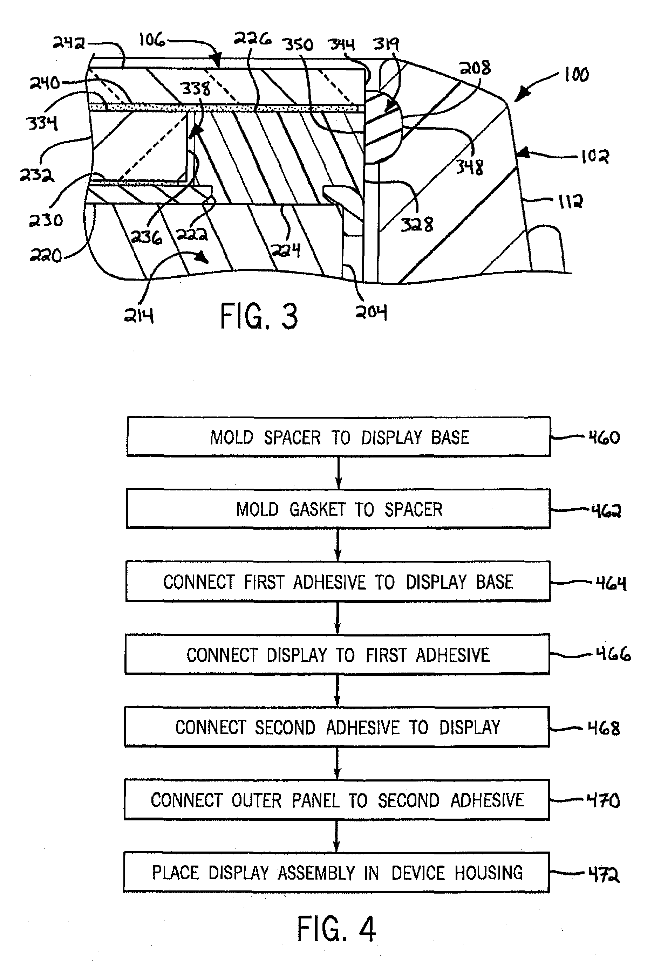

Fig. 3 is a front section view of the display assembly and the gasket along line 2-2 of Fig. 1;
Fig. 4 is a flow chart illustrating a manufacturing process for the electronic mobile device of Fig. 1;

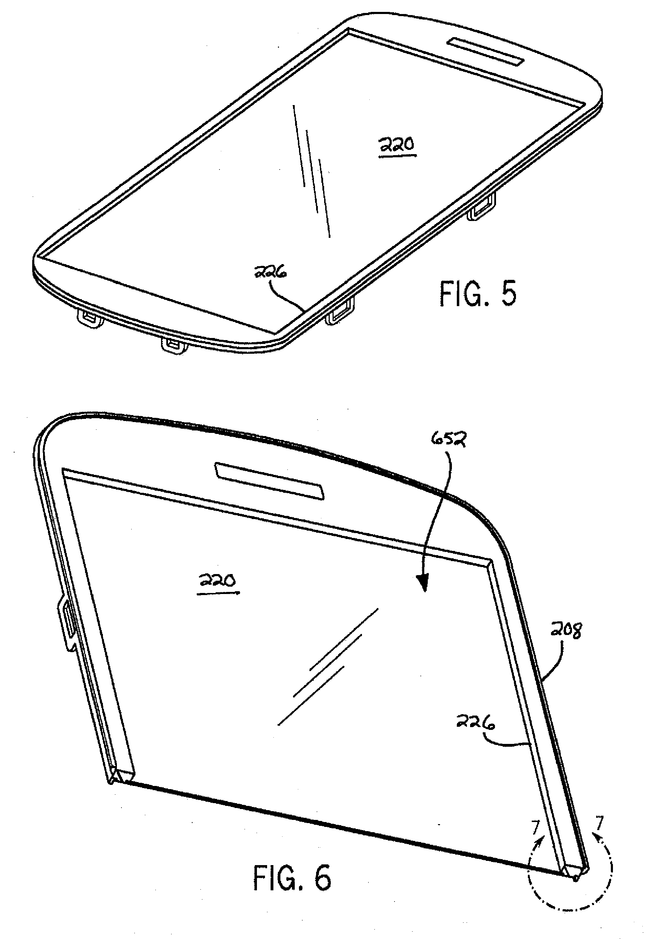

Fig. 5 is a perspective view of a manufacturing subassembly including a spacer of the display assembly connected to a display base;
Fig. 6 is a perspective section view of a manufacturing subassembly including the gasket connected to the spacer of Fig. 5;

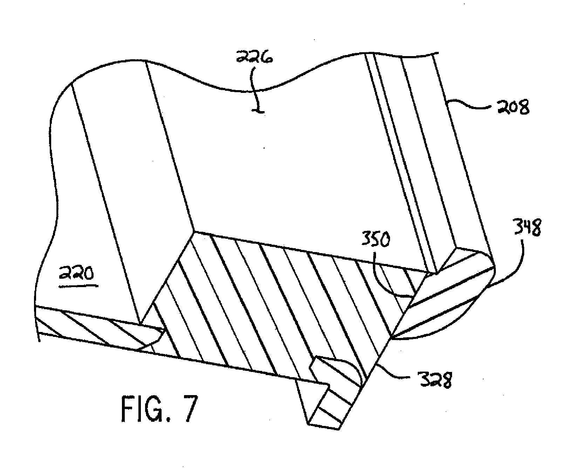

Fig. 7 is a detail perspective view of the subassembly of Fig. 6 enclosed by line 7-7;

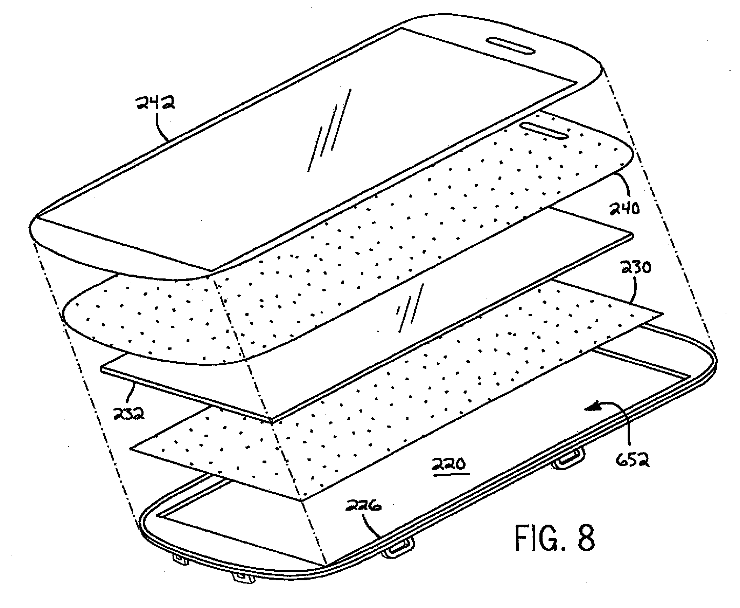

Fig. 8 is an exploded perspective view of a manufacturing subassembly including the subassembly of Fig. 6, adhesives, a display, and an outer panel;

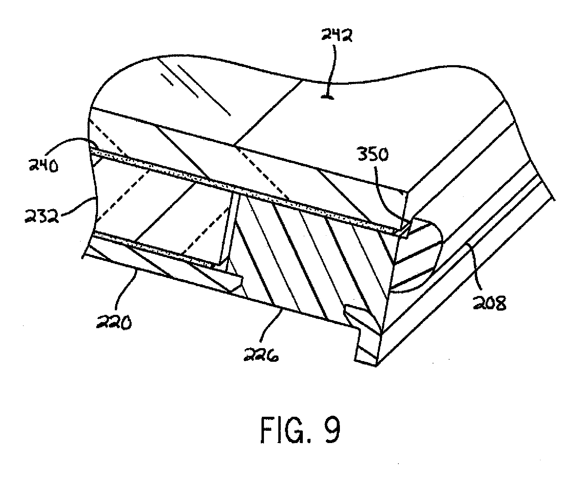

Fig. 9 is a detail section view of the subassembly of Fig. 8;

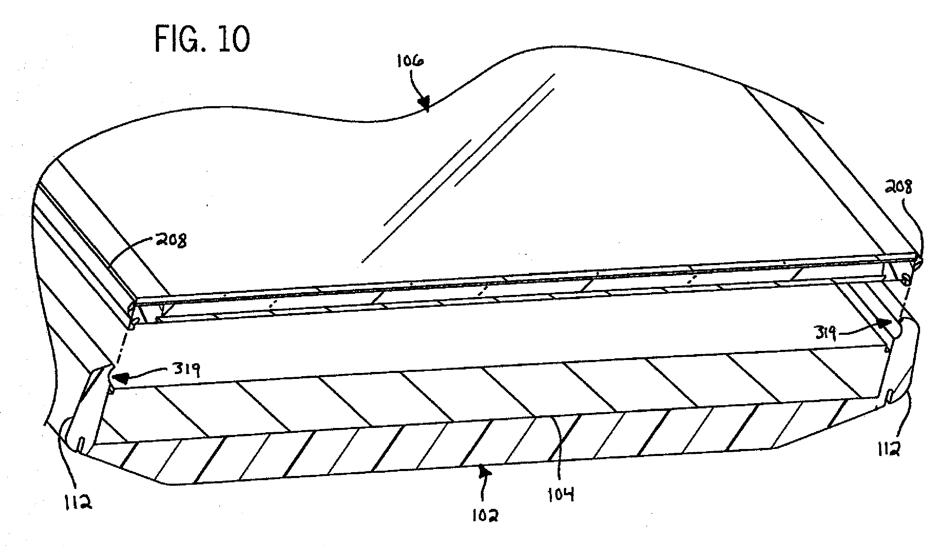

Fig. 10 is an exploded section view of a manufacturing subassembly including the subassembly of Fig. 8 and a device housing; and

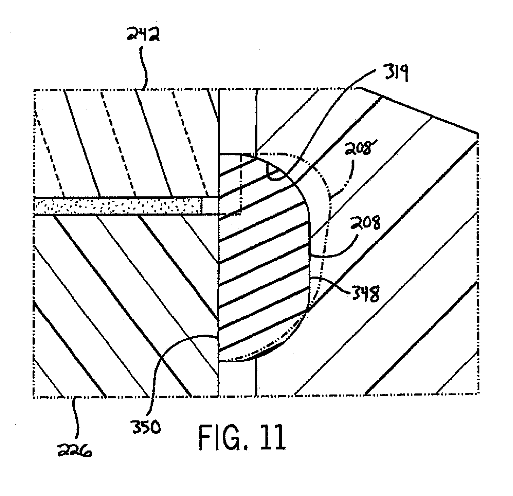

Fig. 11 is a section view illustrating deformation of the gasket due to engagement with the device housing.

### DETAILED DESCRIPTION

According to some embodiments, an electronic mobile device comprises a device housing and a spacer supported within the device housing. An outer panel is supported by the spacer, and the outer panel and the spacer together define an internal recess. A display configured to display information is supported by the device housing within the internal recess. A gasket is compressed between the device housing, the spacer, and the outer panel to inhibit debris ingress to the device housing. The gasket has a first side that engages the device housing and a second side that engages the spacer and the outer panel.

The teachings of the present disclosure relate generally to portable electronic devices, e.g., mobile communication devices such as pagers, cellular phones, global positioning system (GPS) navigation devices and other satellite navigation devices, smart phones, wireless organizers, wireless personal digital assistants (PDA), and tablet computers. The portable electronic devices could be devices without wireless communication capabilities such as PDAs, electronic gaming devices, digital photograph albums or picture frames, digital cameras, or digital video recorders. These examples are intended to be non-limiting. It is also possible that the teachings of the present disclosure could be applied to electronic devices other than handheld electronic devices, *e.g.,* notebook computers.

Referring now to Figs. 1-3, an electronic mobile device 100 according to the present disclosure includes a device housing 102 that supports electronic components 204 (Fig. 2) and a display assembly 106. A seal or gasket 208 is supported between the device housing 102 and the display assembly 106 to prevent debris ingress to the device housing 102. The gasket 208 also transfers impact forces to more rugged components of the display assembly 106 and away from delicate components. Furthermore, the structure of the gasket 208, the display assembly 106, and the device housing 102 facilitate ease of manufacturing and assembly. These aspects and components are described in further detail in the following paragraphs, beginning with the device housing 102 and concluding with the manufacturing process.

Still referring to Figs. 1-3, the device housing 102 is a generally open-top box shaped component. That is, the device housing 102 includes a back wall 210 (Fig. 2) and a plurality of side walls 112 extending away from the edges of the back wall 210. Together, the back wall 210 and the side walls 112 define a front recess 214 (Fig. 2) in which other components of the device 100 are housed. The side walls 112 also define a gasket channel 319 (Fig. 3) that extends along the inner perimeter of the side walls 112. That is, the gasket channel 319 faces the front recess 214 of the device housing 102.

The back wall 210 and the side walls 112 may also support other components of the device 100, such as buttons 116, power/data ports 118, covers overlaying battery and removable memory compartments (not shown), and the like. In addition, the device housing 102 may comprise various materials, such as metals, polymers, combinations thereof, and the like.

As described briefly above, the front recess 214 of the device housing 102 houses the electronic components 204. In some embodiments, these components include a microprocessor (not shown), communication modules (not shown), and signal transmitters and receivers (not shown). The device housing 102 may also house additional or other electronic components commonly associated with electronic mobile devices 100.

Referring now to Figs. 2 and 3, the display assembly 106 is housed in the front recess 214 of the device housing 102 and overlays the electronic components 204. In general, the display assembly 106 includes several components, some of which are used to display information and others of which are used to connect and/or protect the components that display information. Immediately above the electronic components 204, the display assembly 106 includes a display base 220. The display base 220 is a generally thin and flat support component that may comprise, for example, metals, polymers, and combinations thereof. The display base 220 includes a plurality of holes, one of which is shown and identified by reference number 222. Each of the holes 222 receives a mounting boss 224 of a spacer 226 that extends proximate the edges of the display base 220.

The spacer 226 generally has a rectangular cross-sectional shape and has an outer perimeter 328 (Fig. 3) disposed proximate each of the side walls 112 of the device housing 102. In addition, the spacer 226 may comprise one or more polymers. The spacer 226 extends about a first adhesive 230 that overlays the display base 220. The first adhesive 230 may be a double-sided adhesive film that adheres to both the display base 220 and a display 232 disposed there above.

The display 232 is a liquid crystal display (LCD), an organic light emitting diode (OLED) display, or the like. In any case, the display 232 has an upper or viewing surface 334 (Fig. 3) on which or through which information, e.g., telephone call information, electronic address book entries, electronic calendar entries, internet web pages, SMS messages, e-mail messages, navigation directions, electronic planner entries, digital photographs, digital videos, and the like, is viewable.

The display 232 is positioned such that the spacer 226 extends thereabout. However, an outer perimeter 236 of the display 232 is spaced apart from the spacer 226 to define a gap 338 (Fig. 3) there between. As described in further detail below, the gap 338 prevents the spacer 226 from transmitting forces directly to the display 232, thereby inhibiting damaging the display 232 by, e.g., dropping the device 100.

A second adhesive 240 overlays both the viewing surface 334 of the display 232 and the spacer 226. The second adhesive 240 may be transparent to permit viewing of the display 232 there through. Furthermore, the second adhesive 240 may be a double-sided adhesive film that adheres to both the display 232 and an outer panel 242 disposed there above.

The outer panel 242 is generally thin and flat, and in some embodiments, is a transparent component comprising one or more polymers or the like. In some embodiments, the outer panel 242 is a touch-sensitive panel that operates in connection with, e.g., piezoelectric sensors (not shown), capacitive sensors (not shown), or the like in order to act as an input panel for the electronic mobile device 100. In any case, an outer perimeter 344 (Fig. 3) of the outer panel 242 is disposed proximate the side walls 112 of the device housing 102.

Still referring to Figs. 2 and 3, the gasket 208 is disposed in the gasket channel 319 of the side walls 112 and extends about the outer perimeters of both the spacer 226 and the outer panel 242. The gasket 208 may have a generally rectangular cross-sectional shape with two arcuate corners and may comprise an elastically deformable polymer that is softer than the side walls 112, the spacer 226, and the outer panel 242. This permits the gasket 208 to be compressed between these components. In particular, a first side 348 (Fig. 3) of the gasket 208 engages the side walls 112 within the gasket channel 319, and a second side 350 of the gasket 208 engages the outer perimeters of both the spacer 226 and the outer panel 242. The manner in which the gasket 208 is connected to the spacer 226 (described in further detail below) provides a tight fit between the gasket 208 and the display assembly 106. This fit, in addition to the gasket 208 engaging the side walls 112, provides a seal between the display assembly 106 and the side walls 112. As such, the gasket 208 prevents debris ingress to the device housing 102 between the side walls 112 and the display assembly 106.

Contact forces between the gasket 208 and the spacer 226 are larger than those between the gasket 208 and the outer panel 242 due to the manner in which the display assembly 106 is connected to the device housing 102 (described in further detail below). That is, the gasket 208 presses against the outer panel 242 more loosely than it does against the spacer 226. As a result, the majority of an impact force acting on the device housing 102 *(e.g.,* caused by dropping the device) is transmitted to the spacer 226 or acts to press the gasket 208 more tightly against the spacer 226. This manner of reacting to impact forces inhibits the forces from damaging the outer panel 242.

Considering the contact forces described above, the spacer 226 may engage at least two thirds of the surface area of the second side 350 of the gasket 208 such that the stress caused by the contact forces is relatively low. As a result, the outer panel 242 may engage at most one-third of the surface area of the second side 350.

Referring now to Figs. 4-11, a method for manufacturing the electronic mobile device 100, particularly assembling the display assembly 106 and connecting the device housing 102, is preferably as follows. First, at step 460 and as shown in Fig. 5, the spacer 226 is molded to the display base 220 (*e.g.,* in an insert molding operation). As described above, the tapered mounting bosses 224 of the spacer 226 extend through the holes 222 in the display base 220 to secure the spacer 226 to the display base 220. Next, at step 462 and as shown in Figs. 6 and 7, the gasket 208 is molded to the spacer 226 *(e.g.,* in a co-molding operation) opposite an internal recess 652 defined by the spacer 226 and the display base 220. That is, the gasket 208 is molded along the outer perimeter 328 of the spacer 226.

As shown most clearly in Figs. 7 and 11, the gasket 208 is originally formed with a cross-sectional shape 208' (Fig. 11) that differs from that of the completed assembly. Specifically, the area of the second side 350 of the gasket 208 that ultimately contacts the outer panel 242 is originally offset away from the spacer 226 compared to the area of the second side 350 that contacts the spacer 226. Similarly, the area of the first side 348 opposite the offset area of the second side 350 is also offset away from the spacer 226 by a similar distance. The offset may be at least one-sixth of the original width (*i.e*., the distance between the first side 348 and the second side 350) of the gasket 208 (e.g., about 0.1 to 0.2 mm) to permit the outer panel 242 to be easily placed within the gasket 208 as described in further detail below.

Next, however, and at step 464 and as shown in Fig. 8, the first adhesive 230 is connected to the display base 220 within the internal recess 652. This step may include, e.g., removing a liner (not shown) from the lower surface of the first adhesive 230, pressing the first adhesive 230 against the display base 220, and then removing another liner (not shown) from the upper surface of the first adhesive 230. At step 466 and still referring to Fig. 8, the display 232 is then connected to the first adhesive 230 within the internal recess 652.

Next, at step 468 and as shown in Fig. 8, the second adhesive 240 is overlaid and connects to both the display 232 and the spacer 226. This step may include, e.g., removing a liner (not shown) from the lower surface of the second adhesive 240, pressing the second adhesive 240 against the display 232 and the spacer 226, and then removing another liner (not shown) from the upper surface of the second adhesive 240.

At step 470 and referring to Fig. 9, the outer panel 242 is then connected to the second adhesive 240. As described briefly above, the second side 350 of the gasket 208 is offset from the outer panel 242 and, as such, the outer panel 242 is easily connected to the second adhesive 240 without displacing or deforming the gasket 208. Lastly, at step 472 and referring to Fig. 10, the display assembly 106 and the gasket 208 are positioned in the device housing 102 such that the gasket 208 is received in the gasket channel 319 of the side walls 112.

As shown in Fig. 11, the cross-sectional area of the gasket channel 319 is less than and differs from the shape of the original cross-sectional area 208' of the gasket. As such, positioning the display assembly 106 and the gasket 208 in the device housing 102 causes the softer gasket 208 to deform and move toward the outer panel 242. The second side 350 of the gasket 208 thereby contacts the outer panel 242 to inhibit debris passage adjacent the outer panel 242.

The electronic mobile device 100 and its method of manufacturing described above may be modified in various manners without departing from the scope of the disclosure. For example, the specific cross-sectional shape of the gasket 208 may differ from that shown in the figures to provide a more circular gasket shape. However, the cross-sectional shape of the gasket 208 shown in the figures (*i.e.,* rectangular with two arcuate corners) allows the arcuate corners of the first side 348 to be slid over the side walls 112 to position the gasket 208 in the gasket channel 319, and the generally flat second side 350 securely engages the spacer 226 and the outer panel 242.

From the above description it, should be apparent that the present disclosure provides an electronic mobile device 100 in which a gasket 208 engages an outer display panel 242 to inhibit debris ingress and accumulation beneath the outer panel 242. Moreover, the contact force between the gasket 208 and the outer panel 242 is relatively small compared to that between the gasket 208 and a spacer 226, and therefore the majority of an impact force is transferred to the spacer 226 instead of the outer panel 242. Further still, the present disclosure provides a method for manufacturing the electronic mobile device 100 in a manner that is unlikely to damage components of the display assembly 106.

## Claims

1. An electronic mobile device, comprising:
a device housing (102);
a spacer (226) supported within the device housing (102);
an outer panel (242) supported by the spacer (226), the outer panel (242) and the spacer (226) together defining an internal recess;
a display (232) configured to display information and being supported by the device housing (102) within the internal recess;
a gasket (208) compressed between the device housing (102), the spacer (226), and the outer panel (242) to inhibit debris ingress to the device housing (102), the gasket (208) being positioned about an outer perimeter (328) of the spacer (226) during manufacture and deformation of the gasket (208) being such that a first side (348) of the gasket (208) opposite the outer panel (242) engaging a plurality of side walls (112) of the device housing (102) during said manufacture causes a second side (350) of the gasket (208) to engage an outer perimeter (344) of the outer panel (242); and
wherein contact forces between the gasket (208) and the spacer (226) are larger than contact forces between the gasket (208) and the outer panel (242); and
wherein the second side (350) of the gasket (208) has a surface area, and the spacer (226) engages at least two-thirds of the surface area and the outer panel (242) engages at most one-third of the surface area.

2. The electronic mobile device of claim 1, wherein the spacer (226) and the display (232) define a gap (338) therebetween to inhibit forces from being transferred from the spacer (226) directly to the display (232).

3. The electronic mobile device of claim 1, wherein the gasket (208) has a rectangular cross-sectional shape with two arcuate corners.

4. The electronic mobile device of claim 3, wherein the two arcuate corners engage the device housing (102).

5. The electronic mobile device of claim 1, wherein the gasket (208) comprises an elastically-deformable polymer.

6. The electronic mobile device of claim 1, wherein the gasket (208) is positioned within a gasket channel (319) defined by the plurality of side walls (112).

7. The electronic mobile device of claim 1, wherein when the gasket (208) is compressed, the first side (348) of the gasket (208) is convex where the first side (348) engages the plurality of side walls (112), and the second side (350) of the gasket (208) is planar where the second side (350) engages the outer panel (242) and the spacer (226).

8. A method of manufacturing an electronic mobile device, comprising the steps of:
providing a display base (220);
connecting a spacer (226) to the display base (220) such that the spacer (226) and the display base (220) together define an internal recess;
positioning a gasket (208) about an outer perimeter (328) of the spacer (226) opposite the internal recess;
positioning a display (232) within the internal recess;
positioning an outer panel (242) proximate the display (232) and the spacer (226) and outside of the internal recess such that an outer perimeter (344) of the outer panel (242) is spaced apart from the gasket (208); and
deforming the gasket (208) such that the gasket (208) engages the outer perimeter (344) of the outer panel (242) when
a side (348) of the gasket (208) opposite the outer panel (242) engages a plurality of side walls (112) of a device housing (102).

9. The method of claim 8, wherein the step of engaging the gasket (208) with the plurality of side walls (112) of the device housing (102) includes positioning the gasket (208) within a gasket channel (319) defined by the plurality of side walls (112).

10. The method of claim 8, wherein the step of positioning the display (232) within the internal recess includes positioning the display (232) such that an outer perimeter (236) of the display (232) is spaced apart from the spacer (226).

11. The method of claim 8, wherein the step of connecting the gasket (208) about the outer perimeter (328) of the spacer (226) includes co-molding the gasket (208) to the spacer (226).

12. The method of claim 8, wherein the step of connecting the spacer (226) to the display base (220) includes insert molding the spacer (226) to the display base (220).

13. The method of claim 8, further comprising the step of connecting a first adhesive to the display base (220) within the internal recess, and wherein the step of positioning the display (232) within the internal recess includes connecting the display (232) to the first adhesive (230) opposite the display base (220).

14. The method of claim 13, further comprising the step of connecting a second adhesive (240) to the display (232) opposite the display base (220), and wherein the step of positioning the outer panel (242) proximate the display (232) includes connecting the outer panel (242) to the second adhesive (240) opposite the display (232).

## Patentansprüche

1. Eine elektronische mobile Vorrichtung, die aufweist:
ein Vorrichtungsgehäuse (102);
einen Abstandshalter (226), der in dem Vorrichtungsgehäuse (102) getragen wird;
ein äußeres Panel (242), das von dem Abstandshalter (226) getragen wird, wobei das äußere Panel (242) und der Abstandshalter (226) gemeinsam eine interne Aussparung definieren;
eine Anzeige (232), die konfiguriert ist zum Anzeigen von Information und die durch das Vorrichtungsgehäuse (102) in der internen Aussparung getragen wird;
eine Dichtung (208), die zwischen dem Vorrichtungsgehäuse (102), dem Abstandshalter (226) und dem äußeren Panel (242) komprimiert ist, um ein Eindringen von Schmutz in das Vorrichtungsgehäuse (102) zu verhindern, wobei die Dichtung (208) um einen äußeren Umfang (328) des Abstandshalters (226) während der Herstellung positioniert wird, und eine Deformation der Dichtung (208) derart ist, dass eine erste Seite (348) der Dichtung (208) gegenüber dem äußeren Panel (242) eine Vielzahl von Seitenwänden (112) des Vorrichtungsgehäuses (102) während der Herstellung kontaktierend veranlasst, dass eine zweite Seite (350) der Dichtung (208) einen äußeren Umfang (344) des äußeren Panels (242) kontaktiert; und
wobei Kontaktkräfte zwischen der Dichtung (208) und dem Abstandshalter (226) größer sind als Kontaktkräfte zwischen der Dichtung (208) und dem äußeren Panel (242); und
wobei die zweite Seite (350) der Dichtung (208) einen Oberflächenbereich hat, und der Abstandshalter (226) zumindest zwei Drittel des Oberflächenbereichs kontaktiert und das äußere Panel (242) höchsten ein Drittel des Oberflächenbereichs kontaktiert.

2. Die elektronische mobile Vorrichtung gemäß Anspruch 1, wobei der Abstandshalter (226) und die Anzeige (232) einen Spalt (338) dazwischen definieren, um zu verhindern, dass Kräfte von dem Abstandshalter (226) direkt auf die Anzeige (232) übertragen werden.

3. Die elektronische mobile Vorrichtung gemäß Anspruch 1, wobei die Dichtung (208) eine rechteckige Querschnittsform mit zwei gebogenen Ecken hat.

4. Die elektronische mobile Vorrichtung gemäß Anspruch 3, wobei die zwei gebogenen Ecken das Vorrichtungsgehäuse (102) kontaktieren.

5. Die elektronische mobile Vorrichtung gemäß Anspruch 1, wobei die Dichtung (208) ein elastisch deformierbares Polymer aufweist.

6. Die elektronische mobile Vorrichtung gemäß Anspruch 1, wobei die Dichtung (208) in einem Dichtungskanal (319) positioniert ist, der durch die Vielzahl von Seitenwänden (112) definiert ist.

7. Die elektronische mobile Vorrichtung gemäß Anspruch 1, wobei, wenn die Dichtung (208) komprimiert ist, die erste Seite (348) der Dichtung (208) konvex ist, wo die erste Seite (348) die Vielzahl von Seitenwänden (112) kontaktiert, und die zweite Seite (350) der Dichtung (208) planar ist, wo die zweite Seite (350) das äußere Panel (242) und den Abstandshalter (226) kontaktiert.

8. Ein Verfahren zur Herstellung einer elektronischen mobilen Vorrichtung, das die Schritte aufweist:
Vorsehen einer Anzeigebasis (220);
Verbinden eines Abstandshalters (226) mit der Anzeigebasis (220) derart, dass der Abstandshalter (226) und die Anzeigebasis (220) gemeinsam eine interne Aussparung definieren;
Positionieren einer Dichtung (208) um einen äußeren Umfang (328) des Abstandshalters (226) gegenüber der internen Aussparung;
Positionieren einer Anzeige (232) in der internen Aussparung;
Positionieren eines äußeren Panels (242) nahe der Anzeige (232) und des Abstandshalters (226) und außerhalb der internen Aussparung derart, dass ein äußerer Umfang (344) des äußeren Panels (242) von der Dichtung (208) beabstandet ist; und
Deformieren der Dichtung (208) derart, dass die Dichtung (208) den äußeren Umfang (344) des äußeren Panels (242) kontaktiert, wenn eine Seite (348) der Dichtung (208) gegenüber dem äußeren Panel (242) eine Vielzahl von Seitenwänden (112) eines Vorrichtungsgehäuses (102) kontaktiert.

9. Das Verfahren gemäß Anspruch 8, wobei der Schritt des Kontaktierens der Dichtung (208) mit der Vielzahl von Seitenwänden (112) des Vorrichtungsgehäuses (102) ein Positionieren der Dichtung (208) in einem Dichtungskanal (319) umfasst, der durch die Vielzahl von Seitenwänden (112) definiert wird.

10. Das Verfahren gemäß Anspruch 8, wobei der Schritt des Positionierens der Anzeige (232) in der internen Aussparung ein Positionieren der Anzeige (232) umfasst derart, dass ein äußerer Umfang (236) der Anzeige (232) von dem Abstandshalter (226) beabstandet ist.

11. Das Verfahren gemäß Anspruch 8, wobei der Schritt des Verbindens der Dichtung (208) um den äußeren Umfang (328) des Abstandshalters (226) ein Co-Formen der Dichtung (208) mit dem Abstandshalter (226) umfasst.

12. Das Verfahren gemäß Anspruch 8, wobei der Schritt des Verbindens des Abstandhalters (226) mit der Anzeigebasis (220) ein Umspritzen des Abstandshalters (226) mit der Anzeigebasis (220) umfasst.

13. Das Verfahren gemäß Anspruch 8, das weiter den Schritt eines Verbindens eines ersten Klebstoffs mit der Anzeigebasis (220) in der internen Aussparung aufweist, und wobei der Schritt des Positionierens der Anzeige (232) in der internen Aussparung ein Verbinden der Anzeige (232) mit dem ersten Klebstoff (230) gegenüber der Anzeigebasis (220) umfasst.

14. Das Verfahren gemäß Anspruch 13, das weiter den Schritt des Verbindens eines zweiten Klebstoffs (240) mit der Anzeige (232) gegenüber der Anzeigebasis (220) aufweist, und wobei der Schritt des Positionierens des äußeren Panels (242) in der Nähe der Anzeige (232) ein Verbinden des äußeren Panels (242) mit dem zweiten Klebstoff (240) gegenüber der Anzeige (232) umfasst.

## Revendications

1. Dispositif mobile électronique, comprenant :
un boîtier de dispositif (102) ;
un élément d'espacement (226) supporté à l'intérieur du boîtier de dispositif (102) ;
un panneau externe (242) supporté par l'élément d'espacement (226), le panneau externe (242) et l'élément d'espacement (226) définissant ensemble un évidement interne ;
un dispositif d'affichage (232) configuré pour afficher des informations et étant supporté par le boîtier de dispositif (102) à l'intérieur de l'évidement interne ;
un joint d'étanchéité (208) comprimé entre le boîtier de dispositif (102), l'élément d'espacement (226), et le panneau externe (242) pour empêcher l'entrée de débris dans le boîtier de dispositif (102), le joint d'étanchéité (208) étant positionné autour d'un périmètre externe (328) de l'élément d'espacement (226) pendant la fabrication et la déformation du joint d'étanchéité (208) étant tel qu'un premier côté (348) du joint d'étanchéité (208) opposé au panneau externe (242) s'engageant avec une pluralité de parois latérales (112) du boîtier de dispositif (102) pendant ladite fabrication amène un deuxième côté (350) du joint d'étanchéité (208) à s'engager avec un périmètre externe (344) du panneau externe (242) ; et
dans lequel des forces de contact entre le joint d'étanchéité (208) et l'élément d'espacement (226) sont supérieures à des forces de contact entre le joint d'étanchéité (208) et le panneau externe (242) ; et
dans lequel le deuxième côté (350) du joint d'étanchéité (208) présente une superficie, et l'élément d'espacement (226) s'engage avec au moins deux tiers de la superficie et le panneau externe (242) s'engage avec au plus un tiers de la superficie.

2. Dispositif mobile électronique de la revendication 1, dans lequel l'élément d'espacement (226) et le dispositif d'affichage (232) définissent un espace (338) entre eux pour empêcher des forces d'être transférées de l'élément d'espacement (226) directement au dispositif d'affichage (232).

3. Dispositif mobile électronique de la revendication 1, dans lequel le joint d'étanchéité (208) présente une forme en section transversale rectangulaire avec deux coins arqués.

4. Dispositif mobile électronique de la revendication 3, dans lequel les deux coins arqués s'engagent avec le boîtier de dispositif (102).

5. Dispositif mobile électronique de la revendication 1, dans lequel le joint d'étanchéité (208) comprend un polymère élastiquement déformable.

6. Dispositif mobile électronique de la revendication 1, dans lequel le joint d'étanchéité (208) est positionné à l'intérieur d'un canal de joint d'étanchéité (319) défini par la pluralité de parois latérales (112).

7. Dispositif mobile électronique de la revendication 1, dans lequel lorsque le joint d'étanchéité (208) est comprimé, le premier côté (348) du joint d'étanchéité (208) est convexe où le premier côté (348) s'engage avec la pluralité de parois latérales (112), et le deuxième côté (350) du joint d'étanchéité (208) est plan où le deuxième côté (350) s'engage avec le panneau externe (242) et l'élément d'espacement (226).

8. Procédé de fabrication d'un dispositif mobile électronique, comprenant les étapes consistant :
à fournir une base d'affichage (220) ;
à relier un élément d'espacement (226) à la base d'affichage (220) de sorte que l'élément d'espacement (226) et la base d'affichage (220) définissent ensemble un évidement interne ;
à positionner un joint d'étanchéité (208) autour d'un périmètre externe (328) de l'élément d'espacement (226) de manière opposée à l'évidement interne ;
à positionner un dispositif d'affichage (232) à l'intérieur de l'évidement interne ;
à positionner un panneau externe (242) à proximité du dispositif d'affichage (232) et de l'élément d'espacement (226) et à l'extérieur de l'évidement interne de sorte qu'un périmètre externe (344) du panneau externe (242) soit espacé du joint d'étanchéité (208) ; et
à déformer le joint d'étanchéité (208) de sorte que le joint d'étanchéité (208) s'engage avec le périmètre externe (344) du panneau externe (242) lorsqu'un côté (348) du joint d'étanchéité (208) opposé au panneau externe (242) s'engage avec une pluralité de parois latérales (112) d'un boîtier de dispositif (102).

9. Procédé de la revendication 8, dans lequel l'étape consistant à engager le joint d'étanchéité (208) avec la pluralité de parois latérales (112) du boîtier de dispositif (102) comporte le fait de positionner le joint d'étanchéité (208) à l'intérieur d'un canal de joint d'étanchéité (319) défini par la pluralité de parois latérales (112).

10. Procédé de la revendication 8, dans lequel l'étape consistant à positionner le dispositif d'affichage (232) à l'intérieur de l'évidement interne comporte le fait de positionner le dispositif d'affichage (232) de sorte qu'un périmètre externe (236) du dispositif d'affichage (232) soit espacé de l'élément d'espacement (226).

11. Procédé de la revendication 8, dans lequel l'étape consistant à relier le joint d'étanchéité (208) autour du périmètre externe (328) de l'élément d'espacement (226) comporte le fait de co-mouler le joint d'étanchéité (208) à l'élément d'espacement (226).

12. Procédé de la revendication 8, dans lequel l'étape consistant à relier l'élément d'espacement (226) à la base d'affichage (220) comporte un moulage par insertion de l'élément d'espacement (226) à la base d'affichage (220).

13. Procédé de la revendication 8, comprenant en outre l'étape consistant à relier un premier adhésif à la base d'affichage (220) à l'intérieur de l'évidement interne, et dans lequel l'étape consistant à positionner le dispositif d'affichage (232) à l'intérieur de l'évidement interne comporte le fait de relier le dispositif d'affichage (232) au premier adhésif (230) de manière opposée à la base d'affichage (220).

14. Procédé de la revendication 13, comprenant en outre l'étape consistant à relier un deuxième adhésif (240) au dispositif d'affichage (232) de manière opposée à la base d'affichage (220), et dans lequel l'étape consistant à positionner le panneau externe (242) à proximité du dispositif d'affichage (232) comporte le fait de relier le panneau externe (242) au deuxième adhésif (240) de manière opposée au dispositif d'affichage (232).
